# EUROPEAN PATENT SPECIFICATION

(11) **EP 0 796 455 B1**
(45) Date of publication and mention of the grant of the patent: **23.09.1998**
(21) Application number: 95936646.9
(22) Date of filing: 09.11.1995
(51) Int. Cl.: G02F 1/1335

(54) **A DEVICE FOR BACKLIGHTING A LIQUID CRYSTAL PANEL**
VORRICHTUNG ZUR HINTERGRUND-BELEUCHTUNG EINER FLUESSIGKRISTALLTAFEL
DISPOSITIF POUR ECLAIRER DEPUIS L'ARRIERE UN PANNEAU A CRISTAUX LIQUIDES

(30) Priority: 09.12.1994 GB 9424924
(43) Date of publication of application: 24.09.1997
(73) Proprietor: CENTRAL RESEARCH LABORATORIES LIMITED, Hayes, Middlesex, UB3 1HH (GB)
(72) Inventor: HOLDEN, John, Dawley Road Hayes Middlesex UB3 1HH (GB); DOBRUSSKIN, Christoph, Postbox 218 NL-5600 MD Eindhoven (NL)
(74) Representative: Leaman, Keith
(86) International application number: GB9502628
(87) International publication number: WO9618129

(56) References cited:
- EP-A- 0 275 601
- EP-A- 0 606 939

## Description

This invention relates to a device for backlighting a liquid crystal panel, comprising a source of light, a quarter wave retarder and a circularly polarizing element being arranged between the source and the retarder, such that in operation light from the source passes through the circularly polarizing element and through the quarter wave retarder, thereby providing plane-polarized light for backlighting a liquid crystal panel.

A known such device is disclosed in WO 94/16355. In this device the circularly polarizing element comprises a plurality of aligned cholesteric liquid crystal layers each reflecting light of a first circular polarization and transmitting light of the other sense of circular polarization. The device also includes Fresnel lenses to collimate and condense the light to provide a bright source suitably for use in an overhead projection system.

The use of such a device in an overhead projection system requires the use of large area optical quality retarder and polarizer elements. A further requirement is Fresnel lenses or other collimating means. Such additional elements are expensive to manufacture and require alignment of the optical system to work in an optimum fashion. Both of these aspects increase the cost of making the device. In addition such prior art devices only operate over a restricted angle of view.

A device according to the first paragraph is also disclosed in EP 0 606 939, which describes the use of a cholesteric liquid crystal lamina as a circularly polarizing element together with a seperate diffuser which is light transmissive. A diffuse light source including a luminescent element is disclosed in EP 0 275 601.

According to the invention there is provided a device for backlighting a liquid crystal panel as defined in the first paragraph above, characterised in that the circularly polarizing element comprises a plurality of flakes of an aligned chiral liquid crystal material and a light transmissive non birefringent binder in a layer being carried by a light transmissive member, the element supplying diffuse and/or uncollimated light to the quarter wave retarder from the source of light in use, the chiral liquid crystal material being a solid at room temperatuve.

Such a device can be cheaper and easier to manufacture for use with non-projection liquid crystal displays.

An embodiment of the invention will now be described, by way of example only, with reference to the accompanying diagrammatic drawings, in which
Figure 1 shows, a cross section of a device, according to a comparative example, and
Figure 2 shows, a cross section of a second device according to the invention.

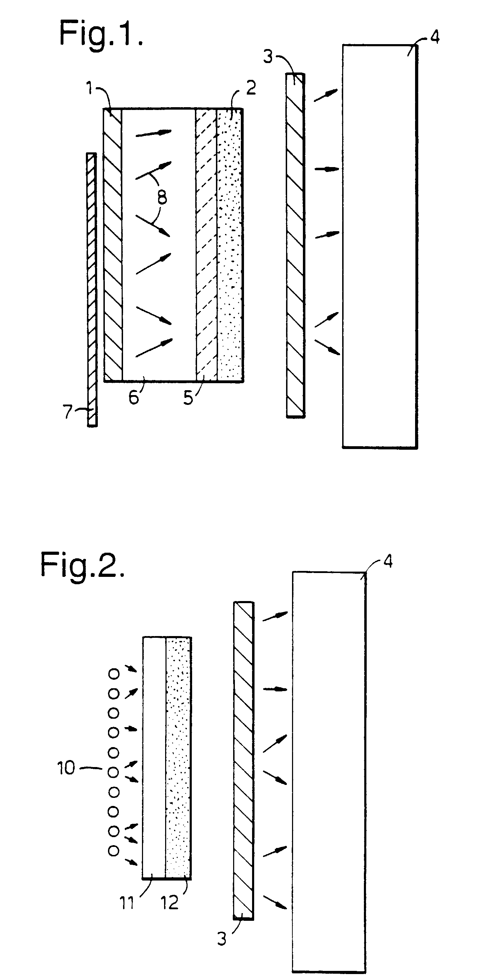

In Figure 1, a device for backlighting a liquid crystal panel (4), comprises a source of light consisting in the present example of a layer of a phosphor material (1) on the exterior of a surface of a glass envelope of an electrodeless lamp having a gas filled central cavity (6) and a dichroic UV mirror (5) which allows all non-UV light to pass through provided on the opposite surface of the glass envelope, a quarter wave retarder (3), and a circularly polarizing element (2) arranged between the light source (1) and the retarder (3). The electrodeless lamp has an external spiral electrode (7). In operation, diffuse unpolarized light (8) is emitted by the phosphor layer (1). This light passes through the circularly polarizing element (2) in its way towards the retarder (3) and ultimately the liquid crystal panel (4).

The circularly polarizing element (2) comprises a layer of a chiral liquid crystal material (in the present example a layer of an aligned cholesteric liquid crystal polymer which has been UV cross-linked and is a solid at room temperature). In operation, the phosphor layer is excited by UV light generated in the gas filled cavity by a plasma driven by the spiral external electrode. The phosphor layer may in general be on an internal or extemal surface of this envelope, or on another surface within the envelope. Obviously in the present case where the phosphor is on an external surface envelope must be made from quartz or another material which is transparent to such UV light, otherwise the layers (1) and (5) would need to be on the intemal surfaces of the envelope. This excitation produces visible light which is diffuse and unpolarized. This light will emerge from the lamp and pass through the UV dichroic filter to impinge upon the circularly polarizing element. The UV dichroic filter is there to improve the lamp efficiency by directing UV light which is generated by the plasma in the gas filled cavity back towards the phosphor layer so that it is not lost.
The circularly polarizing element in the present example is chosen to have a reflection characteristic such that all visible wavelengths being left-hand circularly polarized are reflected back towards the light source. This reflected light will then be re-reflected by the phosphor layer. This second reflection (and any subsequent odd numbered reflections from the phosphor layer) will change the polarization state of the light to be right hand circularly polarized, such that when the light again emerges from the lamp and impinges upon the circularly polarizing element it will be transmitted. Thus the light travelling towards the quarter wave retarder will be diffuse uncollimated light having no left hand circular polarized component, but having a larger than usual right hand circularly polarized component. This predominantly right hand circularly polarized light will be transformed into predominantly linearly polarized light by the quarter wave retarder (3), so that the liquid crystal display panel (4) is illuminated by this light.

In the present example, the light source (1) has an area which is slightly smaller than that of the liquid crystal panel, but is of approximately the same size.

Figure 2 shows a cross section of a device according to the invention. Elements of the device having the same function in Figure 1 and Figure 2 are denoted by the same numerals where possible. In this embodiment the light source comprises a bank of elongate fluorescent tubes (10) which emit white light towards a diffusive light-transmissive sheet (11). This sheet is coated on the side facing away from the fluorescent tubes with a layer comprising flakes of a solid aligned cholesteric liquid crystal polymer in a light transmissive non birefringent binder. This sheet forms a liquid crystal lamina which acts as a diffusing circularly polarizing element. The rest of the device in this embodiment comprises a quarter wave retarder (3) and liquid crystal panel (4), as in the comparative example described above. In this embodiment, the source of diffusive light may be replaced by a point light source as the circularly polarizing element will cause the light impinging upon the quarter wave retarder to be diffuse. As an alternative to a diffusive light source, a point light source plus diffusing means may in general be substituted.

As a further alternative, the light source may take the form of an edge-lit transparent sheet having a diffusive coating such as white paint on its rear surface. The light source may also be constituted by an illuminated sheet of fluorescent plastic.

Although in the above embodiment the chiral liquid crystal lamina has only a single reflection characteristic which substantially spans the visible wave band, the layer may be made up from a plurality of flakes in a single layer each having a respective wavelength reflection band. If such bands are arranged such that substantially the whole visible wave band is in one or other of the respective reflection characteristics an equivalent high efficiency device also results. In order to ensure that the light from the device is substantially polarized for large angles of view, it is desirable that the reflection characteristics extend into the ultra-violet region of the spectrum.

The devices described above may by provided with a liquid crystal panel to give a display device, or can be provided for use with a separate liquid crystal panel. The devices described can have significant advantages over those described in the prior art. In particular the devices are simpler and cheaper to construct and do not require alignment of focussing or collimating means. In addition, the devices are suitable for display devices which are not to be used for overhead projector applications. The devices have the potential for a much wider angle of view or much wider angle of polarized illumination. The use of a circular polarizing element which is not of a high optical quality (e.g. consisting of a plurality of separate flakes supported on a light transmissive substrate) may significantly reduce the cost of manufacture.

## Claims

1. A device for backlighting a liquid crystal panel, comprising a source of light (1), a quarter wave retarder (3), and a circularly polarizing element (2) being arranged between the source and the retarder, such that in operation light from the source passes through the circularly polarizing element and through the quarter wave retarder, thereby providing plane polarized light for backlighting a liquid crystal panel, characterized in that the circularly polarizing element comprises a plurality of flakes of an aligned chiral liquid crystal material and a light transmissive non birefringent binder in a layer being carried by a light transmissive member, the chiral liquid crystal material being a solid at room temperature such that the circularly polarizing element supplies diffuse and/or uncollimated light to the quarter wave retarder from the source of light in use.

2. A device as claimed in claim 1 in which each of said plurality of flakes has a respective wavelength reflection band.

3. A device as claimed in claim 1 in which the source of light is constituted by a luminescent element.

4. A device as claimed in claim 3 in which the luminescent element comprises a planar layer of luminescent material.

5. A liquid crystal display comprising a device as claimed in claim 1 and further comprising a liquid crystal panel being backlit by the source of light in operation.

6. A display as claimed in claim 5, in which the source of light is constituted by a luminescent element being of approximately equal area to the liquid crystal panel.

## Patentansprüche

1. Vorrichtung zur Hintergrund-Beleuchtung einer Flüssigkristalltafel, mit einer Lichtquelle (1), einem Lambda-Viertel-Retardierer (3) und einem zirkularen Polarisationselement (2), welches derart zwischen der Quelle und dem Retardierer angeordnet ist, daß beim Betrieb Licht von der Quelle durch das zirkulare Polarisationselement und durch den Lambda-Viertel-Retardierer hindurchtritt, wodurch eben polarisiertes Licht zur Hintergrund-Beleuchtung einer Flüssigkristalltafel bereitgestellt wird, dadurch gekennzeichnet, daß das zirkulare Polarisationselement eine Vielzahl von Schuppen eines ausgerichteten chiralen Flüssigkristallmaterials und einen lichtdurchlässigen, nicht doppelbrechenden Binder in einer Schicht, getragen von einem lichtdurchlässigen Teil, umfaßt, wobei das chirale Flüssigkristallmaterial bei Zimmertemperatur fest ist, derart, daß das zirkulare Polarisationselement während des Betriebs von der Lichtquelle diffuses und/oder nicht kollimatiertes Licht an den Lambda-Viertel-Retardierer zuführt.

2. Vorrichtung nach Anspruch 1, wobei jede der Vielzahl von Schuppen einen Reflexionsbereich entsprechender Wellenlänge aufweist.

3. Vorrichtung nach Anspruch 1, wobei die Lichtquelle durch ein Lumineszenzelement dargestellt ist.

4. Vorrichtung nach Anspruch 3, wobei das Lumineszenzelement eine plane Schicht lumineszierenden Materials umfaßt.

5. Flüssigkristalldisplay mit einer Vorrichtung nach Anspruch 1, welche weiterhin eine im Betrieb von der Lichtquelle erleuchtete Flüssigkristalltafel umfaßt.

6. Display nach Anspruch 5, wobei die Lichtquelle durch ein Lumineszenzelement von ungefähr derselben Fläche wie die Flüssigkristalltafel dargestellt ist.

## Revendications

1. Dispositif pour éclairer depuis l'arrière un panneau à cristaux liquides, comprenant une source de lumière (1), un retardateur quart d'onde(3) et un élément polarisant circulaire (2) installé entre la source et le retardateur, de telle sorte que, lors du fonctionnement, la lumière de la source traverse l'élément polarisant circulaire et le retardateur quart d'onde, pour donner une lumière polarisée plane pour éclairer depuis l'arrière un panneau à cristaux liquides, caractérisé en ce que l'élément polarisant circulaire comprend une pluralité de paillettes d'une substance à cristaux liquides chiraux alignés et un liant non biréfringent transmettant la lumière dans une couche portée par un élément transmettant la lumière, la substance à cristaux liquides chiraux étant un solide à la température ambiante, de telle sorte que l'élément polarisant circulaire fournisse une lumière diffuse et/ou non collimatée au retardateur quart d'onde en provenance de la source de lumière en cours de fonctionnement.

2. Dispositif selon la revendication 1, dans lequel chacune desdites pluralité de paillettes présente une bande de réflexion de longueur d'onde respective.

3. Dispositif selon la revendication 1, dans lequel la source de lumière est constituée par un élément luminescent.

4. Dispositif selon la revendication 3, dans lequel lélément luminescent comprend une couche plane de substance luminescente.

5. Affichage à cristaux liquides comprenant un dispositif selon la revendication 1 et comprenant, en outre, un panneau à cristaux liquides éclairé depuis l'arrière par la source de lumière en cours de fonctionnement.

6. Affichage selon la revendication 5, dans lequel la source de lumière est constituée par un élément luminescent qui est de surface à peu près égale à celle du panneau à cristaux liquides.
